(19) Europäisches Patentamt
European Patent Office
Office européen des brevets

(11) **EP 3 809 215 A1**

(12) **EUROPÄISCHE PATENTANMELDUNG**

(43) Veröffentlichungstag:
**21.04.2021 Patentblatt 2021/16**

(51) Int Cl.:
*G05B 19/418* (2006.01)    *G05B 13/04* (2006.01)

(21) Anmeldenummer: **19203010.4**

(22) Anmeldetag: **14.10.2019**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Siemens Aktiengesellschaft 80333 München (DE)**

(72) Erfinder: **Labisch, Daniel 76149 Karlsruhe (DE)**

(54) **HIERARCHISCHE OPTIMIERUNG MODULARER TECHNISCHER ANLAGEN**

(57)    Vorgeschlagen wird ein computerimplementiertes Verfahren zum Betreiben einer modularen technischen Anlage, wobei die modulare technische Anlage wenigstens ein technisches Modul (2, 3, 4) und ein modulübergreifendes Leitsystem (1) umfasst, das Verfahren umfassend:

a) Übertragen von Randbedingungen und Zielen eines Betriebs der technischen Anlage von dem Leitsystem (1) zu dem wenigstens einen technischen Modul (2, 3, 4) oder zu einer jeweiligen computerimplementierten Repräsentation des technischen Moduls (2, 3, 4);

b) Ermitteln eines optimalen Betriebspunktes des wenigstens einen technischen Moduls (2, 3, 4) in Abhängigkeit der zuvor empfangenen Randbedingungen und Ziele durch das wenigstens eine technische Modul (2, 3, 4) selbst oder durch die jeweilige computerimplementierte Repräsentation des technischen Moduls (2, 3, 4);

c) Ermitteln wenigstens eines zu dem optimalen Betriebspunkt gehörigen Leistungsindikators des jeweiligen technischen Moduls (2, 3, 4) und Übermitteln des wenigstens einen Leistungsindikators von dem wenigstens einen technischen Modul (2, 3, 4) oder der jeweiligen computerimplementierten Repräsentation zu dem Leitsystem (1);

d) Orchestrierung des wenigstens einen technischen Moduls (2, 3, 4) durch das Leitsystem unter Einbeziehung des wenigstens einen Leistungsindikators, um die modulare technische Anlage zu betreiben.

EP 3 809 215 A1

**Beschreibung**

Die Erfindung betrifft ein computerimplementiertes Verfahren zum Betreiben einer modularen technischen Anlage mit den Merkmalen des Anspruchs 1. Außerdem betrifft die Erfindung ein technisches Modul mit den Merkmalen des Anspruchs 2 und eine computerimplementierte Repräsentation eines technischen Moduls mit den Merkmalen des Anspruchs 3.

Modulare verfahrenstechnische Anlagen umfassen mehrere technische Module, die sowohl verfahrenstechnisch als auch über die Automatisierungstechnik miteinander verbunden sind und interagieren. Dabei können die Module von verschiedenen Herstellern stammen und auch unterschiedlich automatisiert sein. Module stellen in gewisser Hinsicht abgeschlossene Einheiten dar, die gewisse Aufgaben erfüllen können. Dazu stellen sie Services bereit, die beispielsweise mittels MTP (Modular Type Package) beschrieben sind.

Ein Service stellt dabei eine Aufgabe oder einen Dienst dar, die durch ein Modul ausgeführt werden kann. Abhängig von der Aufgabe erfordert ein Service im Allgemeinen eine Konfiguration über Parameter, die für die Erfüllung der Aufgabe notwendig sind. Beispielsweise könnte ein Service "Erhitzen" den Parameter Zieltemperatur benötigen. Der Service wird von der Automatisierung der Gesamtanlage (Prozessführungsebene, PFE, bzw. dem Leitsystem) konfiguriert, parametriert und gestartet.

Jede Produktionsanlage soll ihre Aufgabe möglichst optimal erfüllen, wobei es keine universelle Definition von dieser optimalen Erfüllung gibt. Wichtige KPIs (key performance indicator) bzw. Produktionsziele sind beispielsweise die Produktqualität, die produzierte Menge bzw. Produktionsrate und die Kosten der Produktion. Die Produktqualität kann dabei aus mehreren Größen bestehen.

Für eine monolithische (= nicht modulare) Anlage, die für eine lange Betriebsphase ausgelegt ist, lohnt sich im Allgemeinen eine einmalige Optimierung der Automatisierung und der Fahrweise. Die Flexibilität, die durch eine modulare Anlage entsteht, führt jedoch dazu, dass jede Veränderung auch das Optimierungsproblem ändert und eine einmalige Optimierung nicht mehr tragfähig ist. Häufige Optimierungen sind jedoch mit Aufwand und damit mit Kosten verbunden und lohnen sich ggf. nicht mehr. Der Vorteil der Flexibilität durch Modularität wird damit für die Optimierung zum Nachteil.

Der Erfindung liegt die Aufgabe zugrunde, ein computerimplementiertes Verfahren zum Betreiben einer modularen technischen Anlage anzugeben, welches eine Komplexität der Optimierung einer modularen technischen Anlage verringert.

Die zuvor formulierte Aufgabe wird durch ein computerimplementiertes Verfahren zum Betreiben einer modularen technischen Anlage mit den Merkmalen des Anspruchs 1 gelöst. Die modulare technische Anlage umfasst wenigstens ein technisches Modul und ein modulübergreifendes Leitsystem. Das erfindungsgemäße Verfahren umfasst die folgenden Schritte:

a) Übertragen von Randbedingungen und Zielen eines Betriebs der technischen Anlage von dem Leitsystem zu dem wenigstens einen technischen Modul oder zu einer computerimplementierten Repräsentation des technischen Moduls;
b) Ermitteln eines optimalen Betriebspunktes des wenigstens einen technischen Moduls in Abhängigkeit der zuvor empfangenen Randbedingungen und Ziele durch das technische Modul selbst oder durch die computerimplementierte Repräsentation des technischen Moduls;
c) Ermitteln wenigstens eines zu dem optimalen Betriebspunkt gehörigen Leistungsindikators des technischen Moduls und Übermitteln des wenigstens einen Leistungsindikators von dem technischen Modul oder der computerimplementierten Repräsentation des technischen Moduls zu dem Leitsystem;
d) Orchestrierung des wenigstens einen technischen Moduls durch das Leitsystem unter Einbeziehung des wenigstens einen Leistungsindikators, um die modulare technische Anlage zu betreiben.

Bei der modularen technischen Anlage kann es sich um eine Anlage aus der Prozessindustrie wie beispielsweise eine chemische, pharmazeutische, petrochemische oder eine Anlage aus der Nahrungs- und Genussmittelindustrie handeln. Hiermit umfasst sind auch jegliche Anlagen aus der Produktionsindustrie, Werke, in denen z.B. Autos oder Güter aller Art produziert werden. Modulare technische Anlagen, die zur Durchführung des erfindungsgemäßen Verfahrens geeignet sind, können auch aus dem Bereich der Energieerzeugung kommen. Windräder, Solaranlagen oder Kraftwerke zur Energieerzeugung sind ebenso von dem Begriff der technischen Anlage umfasst.

Diese Anlagen verfügen jeweils über ein Leitsystem oder zumindest ein computerunterstütztes Modul zur Steuerung und Regelung des ablaufenden Prozesses oder der Produktion. Zudem weist die modulare technische Anlage eine Vielzahl von technischen Modulen auf, die miteinander kombiniert werden können.

Unter einem Leitsystem wird im vorliegenden Kontext ein computergestütztes technisches System verstanden, das Funktionalitäten zum Darstellen, Bedienen und Leiten eines technischen Systems wie einer Fertigungs- oder Produktionsanlage umfasst. Das Leitsystem umfasst im vorliegenden Fall Sensoren zur Ermittlung von Messwerten sowie verschiedene Aktoren. Zudem umfasst das Leitsystem sogenannte prozessnahe Komponenten, die zur Ansteuerung der Aktoren bzw. Sensoren dienen. Darüber hinaus weist das Leitsystem u.a. Mittel zur Visualisierung der Prozessanlage und zu einem Engineering auf. Unter dem Begriff Leitsystem sind zusätzlich auch weitere Recheneinheiten für komplexere Regelungen und Systeme zur Datenspeicherung und -verarbeitung zu fassen.

Unter einem technischen Modul wird eine abgeschlossene technische Einheit verstanden, die in eine übergeordnete Steuerungsebene integrierbar ist. Ein solches technisches Modul kann zum Beispiel ein Zusammenschluss mehrerer Messstellen oder ein größerer Anlagenteil einer industriellen Anlage sein. Das technische Modul muss aber nicht dem Feld der Industrieanlagen entstammen, sondern kann beispielsweise auch ein Motormodul eines Automobils, eines Schiffs oder dergleichen sein.

Eine computerimplementierte Repräsentation eines technischen Moduls ist beispielsweise eine "Applikation" oder kurz: "App", die auf einem von dem technischen Modul (räumlich) getrennten Rechner oder in einer Cloud-Umgebung ausgeführt wird. Die computerimplementierte Repräsentation ist eine Art digitaler Zwilling des technischen Moduls. In ihr sind alle Informationen enthalten, die zu einer Charakterisierung des Verhaltens des technischen Moduls notwendig sind. Wenn erfindungsgemäß Randbedingungen und Ziele von dem Leitsystem zu der computerimplementierten (digitalen) Repräsentation übertragen und von dort wiederum die Leistungsindikatoren empfangen werden, macht es für das Leitsystem keinen Unterschied, ob es mit dem tatsächlichen (physischen) technischen Modul oder mit dessen computerimplementierter (digitaler) Repräsentation interagiert.

Im Rahmen des erfindungsgemäßen Verfahrens werden Randbedingungen und Ziele des Betriebs der technischen Anlage von dem Leitsystem an die Vielzahl an technischen Modulen oder an deren computerimplementierte Repräsentationen übertragen. Randbedingungen können dabei beispielsweise Temperaturgrenzwerte, Materialeigenschaften, physikalische Grenzbedingungen oder auch ein aktueller Strompreis sein. Ziele des Betriebs können beispielsweise Produktionsmengen und Produktionsarten sein.

Der optimale Betriebspunkt hängt von den an das technische Modul bzw. der computerimplementierten Repräsentation übermittelten Randbedingungen ab, die im technischen Modul nicht beeinflusst werden können. In der technischen (Gesamt-)Anlage sind diese Größen jedoch bekannt oder können gemessen werden. Diese werden vom Leitsystem dem technischen Modul bzw. der computerimplementierten Repräsentation als Information bereitgestellt. Basierend auf den Randbedingungen und den Zielen eines Betriebs der technischen Anlage kann jedes technische Modul optimal betrieben werden. Beispielsweise kann es je nach Situation andere Qualitätsanforderungen geben. Auch die Menge und die zu Verfügung stehende Produktionszeit können variieren. Dementsprechend variieren auch die Produktionskosten.

Die Optimierung auf Modulebene kann unterschiedlich erfolgen. Für einfache Aufgaben der technischen Module reichen algebraische Gleichungen, Kennlinien, Kennfelder oder Heuristiken aus. Komplexere Aufgaben erfordern ggf. die Nutzung von Simulationsmodellen zur Optimierung. Die Ergebnisse der Optimierung, d.h. die für das jeweilige technische Modul unter Berücksichtigung der vorgegebenen Randbedingungen und Ziele optimalen Betriebsart werden von dem technischen Modul bzw. der computerimplementierten Repräsentation ermittelt und in Form eines Leistungsindikators wieder an das Leitsystem als übergelagerte Orchestrierungsinstanz zurückgegeben.

Bei der Optimierung kann als Ergebnis ein einziger Leistungsindikator ermittelt werden, es muss sich aber nicht um einen einzigen Leistungsindikator handeln. Vielmehr kann im Rahmen des erfindungsgemäßen Verfahrens auch eine Mehrzahl an Leistungsindikatoren ermittelt werden. Beispielsweise kann es sich dabei um die Indikatoren "Kosten", "Dauer" oder "Qualität" handeln. Diese können wiederum von einem oder mehreren Parametern abhängen.

Bei vorgegebenen Randbedingungen und Zielen kann es Freiheitsgrade in dem Betrieb der jeweiligen technischen Module geben, die wesentliche Ziele des Betriebs der technischen Anlage (z.B. Produktionsdauer, -kosten, Qualität) beeinflussen. Das Ergebnis der Optimierung, der Leistungsindikator oder die Leistungsindikatoren, wird dem Leitsystem dabei in Form von Kennfeldern über den freien Parametern übergeben. Im Sonderfall eines Freiheitsgrades ergeben sich also Kennlinien der betrachteten Randbedingungen und Ziele.

Oberhalb der technischen Module, auf Ebene des Leitsystems der technischen Anlage, erfolgt anschließend die Orchestrierung der technische Module. Diese kann eine überlagerte Optimierung beinhalten. Dabei werden die von den technischen Modulen bzw. deren computerimplementierter Repräsentation erhaltenen Informationen dazu genutzt, um einen für die technische Anlage optimalen Betrieb zu erzielen.

Ein besonders gewichtiger Vorteil des erfindungsgemäßen Verfahrens liegt darin, dass die Komplexität der jeweiligen technischen Module für die Optimierung eine nur untergeordnete oder zu vernachlässigende Rolle spielt. Das beschriebene Verfahren ermöglicht es, die durch die Modularisierung ermöglichte Flexibilität nicht mehr als Nachteil für die Optimierung zu sehen, sondern nutzt geschickt die dabei entstehenden neuen Möglichkeiten. Bei der Konfiguration bzw. Optimierung jedes technischen Moduls muss nur das (überschaubare) Verhalten dieses technischen Moduls betrachtet werden. Für das technische Modul unbekannte Größen (Randbedingungen, Ziele des Betriebs) werden dafür den technischen Modulen bzw. deren computerimplementierter Repräsentation bereitgestellt. Es ist dabei nicht von Bedeutung, ob die Optimierung nun simulationsbasiert, algebraisch oder heuristisch erfolgt.

Die zuvor formulierte Aufgabe wird gleichsam gelöst durch ein technisches Modul mit den Merkmalen des Anspruchs 2. Dieses ist dazu ausgebildet und vorgesehen:

a) Randbedingungen und Ziele eines Betriebs einer technischen Anlage von einem Leitsystem der technischen Anlage zu empfangen; und

b) einen optimalen Betriebspunkt in Abhängigkeit der zuvor empfangenen Randbedingungen und Ziele selbst zu ermitteln; und

c) wenigstens einen zu dem optimalen Betriebspunkt gehörigen Leistungsindikator des technischen Moduls zu ermitteln und den wenigstens einen Leistungsindikator zu dem Leitsystem zur weiteren Verarbeitung zu übertragen.

Außerdem wird die zuvor formulierte Aufgabe gelöst durch eine computerimplementierte Repräsentation eines technischen Moduls mit den Merkmalen des Anspruchs 3. Diese ist dazu ausgebildet und vorgesehen:

a) Randbedingungen und Ziele eines Betriebs einer technischen Anlage von einem Leitsystem der technischen Anlage zu empfangen; und

b) einen optimalen Betriebspunkt in Abhängigkeit der zuvor empfangenen Randbedingungen und Ziele selbst zu ermitteln; und

c) wenigstens einen zu dem optimalen Betriebspunkt gehörigen Leistungsindikator des technischen Moduls zu ermitteln und den wenigstens einen Leistungsindikator zu dem Leitsystem zur weiteren Verarbeitung zu übertragen.

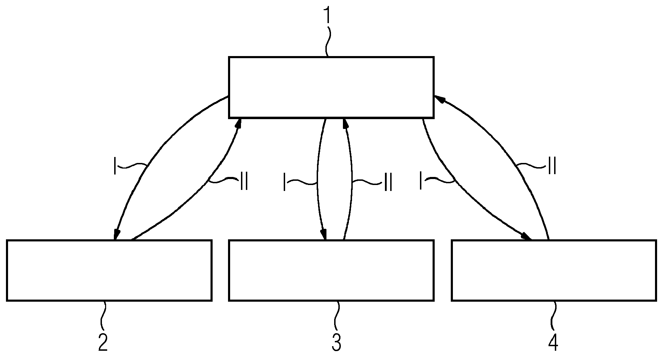

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung des Ausführungsbeispiels, das im Zusammenhang mit der Zeichnung näher erläutert wird.

Die Figur zeigt schematisch ein Leitsystem 1 einer als Prozessanlage ausgebildeten technischen Anlage sowie ein erstes technisches Modul 2, ein zweites technisches Modul 3 und ein drittes technisches Modul 4. Das erste technische Modul 2, das zweite technische Modul 3 und das dritte technische Modul 4 stehen in einem direkten Kontakt mit dem Leitsystem 1.

Das erste technische Modul 2 umfasst einen Reaktionsbehälter, in den Zitronensäure, Natriumcitrat und Natriumsulfat in eine wässrige Lösung zudosiert werden können, um pH-Wert, Dichte und Leitfähigkeit zu verändern. In dem Reaktionsbehälter befindet sich ein Rührer, um die notwendige Durchmischung sicherzustellen. Nachfolgend wird lediglich der pH-Wert und die Dosierung von Zitronensäure betrachtet. Das erste technische Modul 2 bietet im Rahmen einer modularen Automatisierung der Prozessanlage den folgenden Service / Dienst an:

pH-Wert Einstellen: vorgegebenen pH-Wert einstellen
Parameter: pH-Wert, Rührerdrehzahl, Menge

Das zweite technische Modul 3 umfasst einen Fermenter, der über einen Mantel beheizt und gekühlt werden kann. Üblicherweise finden darin Fermentationsprozesse statt. Das zweite technische Modul 3 bietet den folgenden Service / Dienst an:

Fermentation: Aufheizen (15min), vorzugebende Solltemperatur halten (Dauer abhängig von Menge und Solltemperatur), Abkühlen (20min)
Parameter: Solltemperatur, Menge, pH-Wert

In dem dritten technischen Modul 4 wird die zuvor produzierte Flüssigkeit abgefüllt. Das dritte technische Modul 4 bietet den folgenden Service / Dienst an:

Abfüllen des Produkts mit 1 l/min
Parameter: Menge

Die drei technischen Module 2, 3, 4 sind über eine in der Figur nicht dargestellte Infrastruktur derart miteinander verbunden, dass ein beliebiger Austausch von Flüssigkeiten zwischen den technischen Modulen 2, 3, 4 stattfinden kann.

Ein Ziel des Betriebs der Prozessanlage ist die Produktion und Abfüllung von drei Chargen:

- C1: 30l unfermentiertes Produkt mit pH-Wert 2; Fertigstellung in 1,5h
- C2: 30l unfermentiertes Produkt mit pH-Wert 3; Fertigstellung in 2h
- C3: 30l fermentiertes Produkt mit pH-Wert 4; Fertigstellung in 4h

Innerhalb der angegebenen Fertigstellungszeiten sollen die Chargen C1, C2, C3 produziert und fertig abgefüllt sein.

Im vorliegenden Fall sind die Mengen und pH-Werte fest vorgegeben und können den technischen Modulen 2, 3, 4 als Information von dem Leitsystem 1 vorab bereitgestellt werden. Damit wird jedes technische Modul 2, 3 4 an sich optimiert und die Abhängigkeit eines Leistungsindikators von Rührerdrehzahl bzw. Solltemperatur bestimmt.

Für des erste technische Modul 2 wird angenommen, dass vom Hersteller Tabellen abgelegt wurden, wie lange, abhängig von Menge, pH-Wert und Rührerdrehzahl, gerührt werden muss. Daraus werden Stützstellen für die Kennlinien mit der verbleibenden Abhängigkeit Rührerdrehzahl als Leistungsindikator ermittelt.

Für das zweite technische Modul 3 wird angenommen, dass ein verfahrenstechnisches Simulationsmodell zur Verfügung steht. Die Simulation wird mit den nun bekannten Parametern Menge und pH-Wert für verschiedene Temperatursollwerte ausgeführt und die Ergebnisse als Stützstellen in eine Kennlinie als Leistungsindikator überführt.

In dem dritten technischen Modul 4 ist die algebraische Gleichung T = R*V mit der Abfüllrate R=1l/min hinterlegt, die für V=30l direkt zu T = 30min ausgewertet werden kann.

Die konfigurierten Services, die dem Leitsystem 1 als Leistungsindikatoren zur Verfügung gestellt werden, lauten damit:

- pH-Wert Einstellen (V=30l, pH-Wert=2) T = 40min-2min/5%*(N-50%); K = 1€/50%*(N-50%)+4€; Q = 1; jeweils für Rührerdrehzahl (N) im Bereich 50%-100%

- pH-Wert Einstellen (V=30l, pH-Wert=3) T = 60min-3min/5%*(N-50%); K = 1€/50%*(N-50%)+6€; Q = 1; jeweils für Rührerdrehzahl (N) im Bereich 50%-100%

- pH-Wert Einstellen (V=30l pH-Wert=4) T = 50min-1min/2%*(N-50%); K = 1€/50%*(N-50%)+5€; Q = 1; jeweils für Rührerdrehzahl (N) im Bereich 50%-100%

- Fermentation (V=30l, pH-Wert=4) T = 3h-1h/10°C*(Temp-80°C); K = 1€/1°C*(Temp-80°C)+20€; Q = 1-1/100°C*(Temp-80°C); jeweils für Solltemperatur (Temp) im Bereich 80-90°C

- Abfüllen (30l) T = 30min; K = 2€; Q = 1; keine Freiheitsgrade

Dabei werden mit T eine Dauer, mit K Produktionskosten und mit Q eine Produktionsqualität bezeichnet. Hierbei handelt es sich um Leistungsindikatoren, die dem überlagerten Leitsystem 1 zur Verfügung gestellt werden.

Überlagert kann nun die optimierte Orchestrierung der Services erfolgen. Die Produktionsziele sind dabei einzuhalten. Die Mindestqualität beträgt 0,95 und die Kosten sollen minimiert werden, also ergibt sich das zu minimierende Gütekriterium J=K.

Das hier beschriebene Optimierungsproblem enthält binäre Optimierungsparameter (in welcher Reihenfolge werden die Services gestartet) sowie kontinuierliche (die beschriebenen Freiheitsgrade). Redundanzen in der Produktion sind hier nicht verfügbar. Im Allgemeinen können beispielsweise beliebige Verfahren des MINLP (mixed-integer nonlinear programming) zum Einsatz kommen.

In diesem Fall sind die Abhängigkeiten und das Gütekriterium linear, sodass die Lösung mathematisch einfach ist. Dabei ergeben sich die folgenden Parametrierungen der Services in der dargestellten Reihenfolge:

0:00h 1. Modul: pH-Wert Einstellen (V=30l, pH-Wert=4, N=90%)
0:30h 2. Modul: Fermentation (V=30l, pH-Wert=4, Temp=80°C)
0:30h 1. Modul: pH-Wert Einstellen (V=30l, pH-Wert=2, N=75%)
1:00h 3. Modul: Abfüllen (V=30l, pH-Wert=2)
1:00h 1. Modul: pH-Wert Einstellen (V=30l, pH-Wert=3, N=100%)
1:30h 3. Modul: Abfüllen (V=30l, pH-Wert=3)
3:30h 3. Modul: Abfüllen (V=30l, pH-Wert=4).

Die geplanten Fertigstellungzeiten werden damit exakt erfüllt. Gleichzeitig erfolgt die Fermentation mit der niedrigsten Solltemperatur, was zu minimalen Kosten und maximaler Qualität führt. Beim Einstellen der pH-Werte können die Rührerdrehzahlen reduziert werden, um mit der verfügbaren Zeit die Kosten weiter zu reduzieren. Insgesamt ergeben sich die Gesamtkosten zu

$$5,80€ + 20€ + 4,50€ + 2€ + 7€ + 2€ + 2€ = 43,30 €.$$

Findet keine optimierte Orchestrierung in dem Leitsystem 1 statt, sondern wird lediglich mit den Fertigstellungszeiten priorisiert (Reihenfolge C1, C2, C3), so wird zwar C1 und C2 rechtzeitig fertig, die Fertigstellung von C3 verzögert sich jedoch um ca. 1h, was ohne die Optimierung der Services auf Modulebene und die Bereitstellung der Kennfelder vorab gar nicht bekannt ist.

Angenommen, das Zeitproblem wird trotzdem vorab grundsätzlich erkannt, so kann jeder Service entsprechend der minimalen Laufzeit gewählt werden, was Kosten von

$$6€ \; + \; 30€ \; + \; 5€ \; +2€ \; + \; 7€ \; +2€ \; + \; 2€ \; = \; 54 \; €$$

ergibt. Trotzdem wird C3 45 Minuten zu spät fertig. Gleichzeitig erhöhen sich die Kosten im Vergleich zur optimierten Lösung gemäß dem erfindungsgemäßen Verfahren um 25%.

Obwohl die Erfindung im Detail durch das bevorzugte Ausführungsbeispiel und die Figuren näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

**Patentansprüche**

1. Computerimplementiertes Verfahren zum Betreiben einer modularen technischen Anlage, wobei die modulare technische Anlage wenigstens ein technisches Modul (2, 3, 4) und ein modulübergreifendes Leitsystem (1) umfasst, das Verfahren umfassend:

   a) Übertragen von Randbedingungen und Zielen eines Betriebs der technischen Anlage von dem Leitsystem (1) zu dem wenigstens einen technischen Modul (2, 3, 4) oder zu einer jeweiligen computerimplementierten Repräsentation des technischen Moduls (2, 3, 4);
   b) Ermitteln eines optimalen Betriebspunktes des wenigstens einen technischen Moduls (2, 3, 4) in Abhängigkeit der zuvor empfangenen Randbedingungen und Ziele durch das wenigstens eine technische Modul (2, 3, 4) selbst oder durch die jeweilige computerimplementierte Repräsentation des technischen Moduls (2, 3, 4);
   c) Ermitteln wenigstens eines zu dem optimalen Betriebspunkt gehörigen Leistungsindikators des jeweiligen technischen Moduls (2, 3, 4) und Übermitteln des wenigstens einen Leistungsindikators von dem wenigstens einen technischen Modul (2, 3, 4) oder der jeweiligen computerimplementierten Repräsentation zu dem Leitsystem (1);
   d) Orchestrierung des wenigstens einen technischen Moduls (2, 3, 4) durch das Leitsystem unter Einbeziehung des wenigstens einen Leistungsindikators, um die modulare technische Anlage zu betreiben.

2. Technisches Modul (2, 3, 4), das ausgebildet und vorgesehen ist:

   a) Randbedingungen und Ziele eines Betriebs einer technischen Anlage von einem Leitsystem (1) der technischen Anlage zu empfangen; und
   b) einen optimalen Betriebspunkt in Abhängigkeit der zuvor empfangenen Randbedingungen und Ziele selbst zu ermitteln; und
   c) einen zu dem optimalen Betriebspunkt gehörigen Leistungsindikator des technischen Moduls (2, 3, 4) zu ermitteln und den wenigstens einen Leistungsindikator zu dem Leitsystem (1) zur weiteren Verarbeitung zu übertragen.

3. Computerimplementierte Repräsentation eines technischen Moduls (2, 3, 4), die dazu ausgebildet und vorgesehen ist:

   a) Randbedingungen und Ziele eines Betriebs einer technischen Anlage von einem Leitsystem (1) der technischen Anlage zu empfangen; und
   b) einen optimalen Betriebspunkt in Abhängigkeit der zuvor empfangenen Randbedingungen und Ziele selbst zu ermitteln; und
   c) wenigstens einen zu dem optimalen Betriebspunkt gehörigen Leistungsindikator des technischen Moduls (2, 3, 4) zu ermitteln und den wenigstens einen Leistungsindikator zu dem Leitsystem (1) zur weiteren Verarbeitung zu übertragen.

**Europäisches Patentamt**
**European Patent Office**
**Office européen des brevets**

# EUROPÄISCHER RECHERCHENBERICHT

Nummer der Anmeldung

EP 19 20 3010

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2009/154815 A2 (EXXONMOBIL CHEM PATENTS INC [US]; SHETH KIRAN RAJNIKANT [US] ET AL.) 23. Dezember 2009 (2009-12-23) <br> * Absatz [0005] - Absatz [0006] * <br> * Absatz [0015] - Absatz [0053] * <br> * Abbildung 2 * <br> ----- | 1-3 | INV. <br> G05B19/418 <br> G05B13/04 |
| X | US 5 666 297 A (BRITT HERBERT I [US] ET AL) 9. September 1997 (1997-09-09) <br> * Spalte 4, Zeile 36 - Spalte 5, Zeile 27 * <br> * Abbildung 2 * <br> * Anspruch 1 * <br> ----- | 1-3 | |

**RECHERCHIERTE SACHGEBIETE (IPC)**

G05B

Der vorliegende Recherchenbericht wurde für alle Patentansprüche erstellt

| Recherchenort | Abschlußdatum der Recherche | Prüfer |
|---|---|---|
| Den Haag | 22. April 2020 | De Santis, Agostino |

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 19 20 3010

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

22-04-2020

| Im Recherchenbericht angeführtes Patentdokument | Datum der Veröffentlichung | Mitglied(er) der Patentfamilie | Datum der Veröffentlichung |
|---|---|---|---|
| WO 2009154815 A2 | 23-12-2009 | CA 2720730 A1<br>CN 102016731 A<br>EP 2279461 A2<br>US 2009276061 A1<br>WO 2009154815 A2 | 23-12-2009<br>13-04-2011<br>02-02-2011<br>05-11-2009<br>23-12-2009 |
| US 5666297 A | 09-09-1997 | CA 2149169 A1<br>US 5666297 A | 14-11-1995<br>09-09-1997 |

EPO FORM P0461

Für nähere Einzelheiten zu diesem Anhang : siehe Amtsblatt des Europäischen Patentamts, Nr.12/82